# EUROPEAN PATENT SPECIFICATION

(11) **EP 3 327 347 B1**
(45) Date of publication and mention of the grant of the patent: **30.06.2021**
(21) Application number: 16460088.4
(22) Date of filing: 24.11.2016
(51) Int. Cl.: F21S 8/08, F21V 29/70, F21V 15/01, F21S 9/03, F21V 21/30, F21W 131/103, F21V 21/15, F21Y 115/10, F21Y 105/10, F21Y 105/16

(54) **STREETLIGHT**
STRASSENLEUCHTE
LAMPADAIRE

(43) Date of publication of application: 30.05.2018
(73) Proprietor: Skiba, Krzysztof, 43-316 Bielsko-Biala (PL)
(72) Inventor: Skiba, Krzysztof, 43-316 Bielsko-Biala (PL)
(74) Representative: Karczmitowicz, Teresa Ewa

(56) References cited:
- CN-A- 101 487 574
- GB-A- 2 512 053
- US-A1- 2010 302 765
- US-A1- 2012 113 655
- US-A1- 2012 287 643
- US-A1- 2014 036 521
- US-A1- 2015 345 772

## Description

Various aspects of street lamps are addressed by abundant number of inventions, and most of effort is directed to new designs based on light emitting diodes (LEDs).

Chinese utility model CN204986681 (U) discloses a motion-sensitive regulation and control LED street lamp, including street lamp body, LED module, LED module radiator, module heat dissipation backplate, photo sensor, installing port, angle adjusting device, and motion-sensitive ware. The heat dissipation backplate is positioned on the back of the street lamp body corresponding to the LED module.

Another Chinese utility model CN204829616 (U) discloses a LED street lamp, including street lamp support, LED module, bridge type radiator, power supply module and temperature sensor. The street lamp support passes through adjustment mechanism to be connected with the rotation of bridge type radiator. Power supply module is installed on the upper portion of bridge type radiator, and the LED module is installed in the lower part of bridge type radiator. The LED module can have automatically regulated colour temperature and it is connected to the power supply module. The bridge type radiator is the communicating structure at both sides. The street lamp support has angle regulation.

Still another Chinese utility model CN202253310 (U) discloses an integrative solar energy LED street lamp which comprises a lamp body, wherein a solar panel is arranged at its back. Storage battery and solar energy intelligent controller are arranged in the lamp body. Solar energy intelligent controller is electrically connected to solar panel and storage battery. The LED light source module with a triangular heat conducting rack at its back is arranged on a bracket in the lamp body. A radiator fan is aslant arranged on one side of the triangular heat conducting rack. A temperature sensor is arranged on the triangular heat conducting rack. Air inlet and air outlet are respectively formed on the side wall of the lamp body on two sides of the radiator fan. The LED light source module and the temperature sensor are electrically connected to solar energy intelligent controller.

American patent application US2015345772 (A1) discloses a luminaire that includes a housing, a plurality of fins dissipating excessive heat, and an LED module. The housing includes a compartment having a top wall, a side wall extending from the top wall, and an opening in the side wall. The plurality of fins is positioned in this compartment so that at least one fin is in communication with the opening. The LED module includes a printed circuit board, a bezel, and at least one LED, and is connected to at least one of the heat fins.

Most of inventions in street lamps known to date solve specific problems related to streetlights, but little attention is paid to versatility. Street lamps are designed for particular purposes, therefore any change of specified needs requires substantial modifications of technical design. In particular a significant increase of the lamp power entails problems of dissipation of heat produced by the light sources, LEDs included.

The invention proposed here solves the technical problem of easy adaptation of a street lamp to requirement of different levels of illumination and, in consequence, to different levels of produced heat that has to be removed from the lamp. It also solves the problem of removing excessive heat generated by a photovoltaic panel attached to the lamp top surface.

The invention is defined by a streetlight according to claim 1. Preferred embodiments are subject of the depending claims. The lighting unit can have also lateral covers. In preferred embodiment it has a cuboid shape, preferably a flat cuboid with rounded corners and/or rounded edges. Other embodiments with curved (spherical, cylindrical, oval) wall shapes are possible as well. For example a lighting unit with convex bottom can make the illumination angle wider. Inversely, concave bottom can be applied to shape more localized light beam.

The light source is composed of at least one module comprising small light sources. According to the invention the light source is composed of at least one LED module which comprises the LEDs and the controlling and supplying means, all of them mounted on a printed circuit board. Individual LED modules can be arranged side by side, and thus increased power and area of lighting surface can be obtained.

The lighting unit has a void space in the form of an open pocket bounded by front wall and lateral walls of the housing, and the top cover. Void pocket is open to the outside, it surrounds the housing and is covered by the top cover. It makes a room for mounting required number of the heat sink modules. In this void pocket at least one heat sink module is fixed with thermal connection to the housing. The number of the heat sink modules fixed in the void pocket depends on number of the LED modules. Basically this is a quasi-linear dependence. However, individual LED modules can differ in power according to special needs, and then said dependence loses its linearity. Therefore more generally, the number of the heat sink modules is an integer proportional to aggregated power of all LED modules.

Preferably the LED modules are arranged in a rectangular array. The number of the heat sink modules fixed in the void pocket under the top cover is adjusted to the area of the rectangular array. If the LED modules are identical this dependence is basically quasi-linear.

The lighting unit has a movement sensor and/or an infrared sensor. Both types of sensors are used to detect any change in the surrounding space, e.g. appearance of a person, animal, vehicle, etc. The streetlight can be controlled also with use of at least one light sensor. If however the streetlights are controlled by external controlling and supplying means the sensors are not required.

In recommended embodiment the LED modules are rectangular and are arranged in a rectangular array which is divided into sectors. Each sector is individually switched on and off according to the level of ambient light measured by the light sensor.

The top cover of the lighting unit consists of two pieces which are preferably coupled to a hinge. This is convenient for a maintenance work, because opened part of the top cover shall not fall down. Besides, it can be kept in place by a single easy to open lock.

The bottom side of the heat sink module is shielded with the bottom cover or with front and/or lateral protrusion shaped in the housing.

Preferably the heat sink module is integral with the housing and is made of aluminum. Entire housing is a heat conductor and heat produced by LEDs is radiated outside by the fins of the heat sink modules. However, the housing can be made of plastic, but then the space between the LED modules and the top cover is provided with heat absorbing and transporting element, e.g. a metal plate being in thermal contact with the heat sink module. The top cover can play a role of this metal plate.

The fixture has a means to adjust the longitudinal tilt angle (α). Additionally the fixture has a means to adjust the transversal tilt angle (β). According to the invention the fixture has an actuator for adjusting both tilt angles. This change can be controlled remotely. Alternatively the actuator can be controlled by controlling means connected to directional movement sensor and/or directional infrared sensor.

The streetlight according to the invention comprises at least two lighting units which are arranged side by side or set backs to each other, and wherein the fixture is common for at least two lighting units.

The streetlight is arranged by fixing the fixture of the lighting unit to the lamppost or to the wall mount bracket. Preferably the lighting unit is connected to the grid or dedicated electrical network, but it can be powered by a photovoltaic (PV) device, a battery, a windmill and the like, or a combination of different power sources.

In particular integration of PV panel with the streetlight increases a problem of heat removal, because PV panel itself is a source of large amount of heat. This is because PV panels have dark colour, responsible for absorption of IR radiation which turns to heat. Without integrated PV panel the top covers usually have reflective or light dissipating surface, often painted white, thus preventing from accumulation of excessive heat inside the lamp.

Claimed invention solves the problem of redundant heat produced by PV panels. According to the invention, a photovoltaic panel is attached directly to the lighting unit and an integer number of additional heat sink modules, proportional to the heating power produced by the photovoltaic panel, is installed in the void pocket. Therefore a basic set-up of the lighting unit can be easily developed by simple addition of the heat sink modules to more powerful source of light with increased power or increased number of the LED modules, and/or with PV panels.

The streetlight according to the invention is versatile and can be installed in various arrangements: along a street, on crossroads, at the entrance to the building, in parks, gardens, etc. The light sources of different colours or different white light temperatures can be used for special purposes. For example a street can be illuminated with warm white light while the pedestrian crossings with cold white light to draw the drivers attention at more dangerous place.

Embodiments are illustrated on the drawings wherein:
Fig. 1-4 show basic embodiments of the streetlight, with 1, 2, 3 and 4 lighting sectors and heat sink modules, respectively;
Fig. 5-7 show respectively bottom, side, and top view of basic embodiment;
Fig. 8 shows perspective view of the same embodiment;
Fig. 9-10 show another embodiment of the streetlight with Y-type fixture and with regulation of longitudinal and transversal tilt angles;
Fig. 11 shows Y-type embodiment for illumination of vertical surfaces;
Fig. 12 shows the embodiment with T-type fixture mounted on a lamp post;
Fig. 13 shows basic embodiment with basic fixture mounted on a wall mount bracket, with PV panels on the top covers.

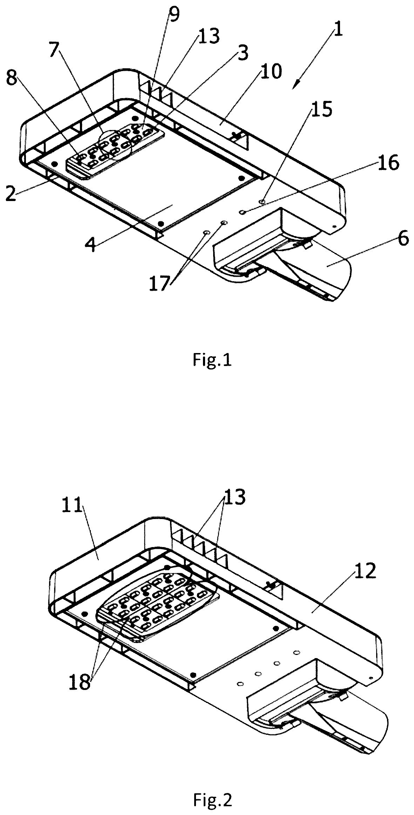

A streetlight comprises in basic embodiment one lighting unit 1 which has a housing 2 equipped with a light source 3, a bottom cover 4 which is partially translucent, a top cover 5, and a fixture 6. The lighting unit is a flat cuboid with rounded corners (Fig. 1).

The bottom cover can be made of milky or transparent glass or plastic. The latter option of transparent bottom cover is recommended if the light beam emitted by the light source is shaped by a lens system, for example a plate composed of adjacent Fresnel lenses, placed between the light source and the bottom cover. Then intensity of light illuminating various areas of lighted surface, e.g. pedestrian crossing, can be easily controlled. Alternatively every lighting element, e.g. LED, can be joined with its own lens. According to particular requirements the lenses, also these on Fresnel plate, can be spherical, cylindrical, elliptical, and other.

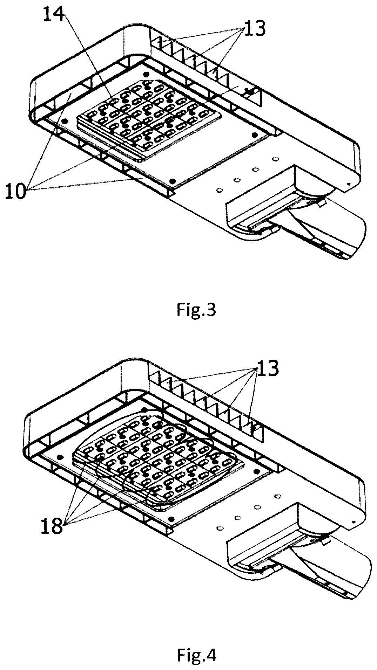

The light source 3 is composed of three (Fig. 1), or six (Fig. 2), or nine (Fig. 3), or twelve (Fig. 4) LED modules 7. All LED modules are identical and each of them comprises four LEDs 8 and the controlling and supplying means mounted on other side (invisible in the drawings) of the printed circuit board 9. The controlling and supplying means fully control the LEDs installed in the LED module. All LED modules are connected in parallel to the power source.

The lighting unit 1 has a void pocket 10 bounded by front wall 11 and lateral walls 12 of the housing 2, and the top cover 5 wherein at least one heat sink module 13 is fixed with thermal connection to the housing. The number of the heat sink modules fixed in the void pocket is adjusted to the number of LED modules. In preferred embodiment one heat sink module is fixed behind the front wall of the lighting unit, and therefore this heat sink module is not visible on the drawings, being covered by the lighting unit front wall. However, to increase cooling of the heat sink by ambient air the front wall can be partially cut-off and then this heat sink module would be visible. Two other heat sink modules are fixed to lateral walls of the housing (Fig. 1). Depending of amount of heat produced by the light source additional heat sink modules can be added in lateral void pocket. Usually additional heat sink modules are mounted if lighting area increases due to increased number of lighting elements, e.g. LEDs.

In proposed embodiment the LED modules are square and they are arranged in a rectangular array 14. The number of the heat sink modules fixed in the void pocket of the lighting unit is adjusted to the area of the rectangular array. Other shapes of the LED modules and resulting other shapes of the lighting arrays are also possible. For example the LED modules can be hexagonal and can be arranged in a honeycomb structure. Alternatively the LED modules can be triangular and can be arranged in triangular, hexagonal, rectangular or semi-rectangular array.

The lighting unit has a movement sensor 15, an infrared (IR) sensor 16 and a number of light sensors 17. The movement sensor is particularly useful in lighting units mounted close to the front door, because opening the door from the inside of the house may be not detected by the IR sensor. In this case the movement sensor will generate a signal switching on the lamp. Besides, the IR sensor can be useless during extremely hot days when temperature after sunset still exceeds 37°C.

Preferably the LED modules are rectangular and are arranged in a rectangular array which is divided into sectors 18. In one sector all LED modules are lit on and off simultaneously. Each sector is individually switched on and off according to the level of ambient light measured by the light sensor. If the lighting unit has only one light sensor then successive sectors are switched on following decreasing level of the output signal of the light sensor, and switched off if the light sensor's output increases. The light sensor's output signal may equally be electric current or voltage. Alternatively each sector can be controlled by a dedicated light sensor, e.g. two sectors require two light sensors (Fig. 2). Also mixed solution can be applied (Fig. 3, 4) to reduce overall costs of the lighting unit.

In particular every LED module can constitute a single sector, all sectors being controlled by single light sensor but with different levels of signal generated by this sensor. Multi-level control is convenient for quasi-continuous and quasi-linear increment/decrement of emitted light intensity, depending on ambient light level.

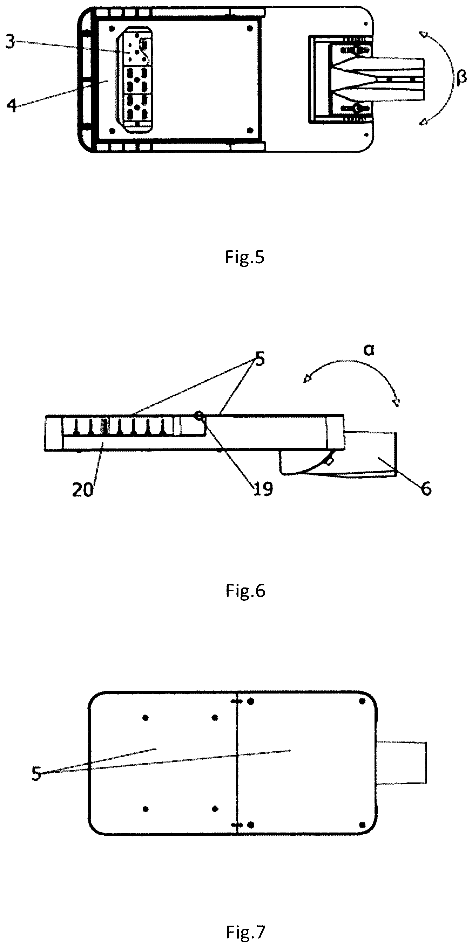

In recommended embodiment the top cover of the lighting unit consists of two pieces which are preferably coupled to a hinge 19 (Fig. 6-8). One part can be screwed to the housing while the other is secured by a clip or other kind of lock. The two-piece cover facilitates maintenance of the lamp, especially if any LED module has to be exchanged.

The bottom side of the heat sink module is shielded with the bottom cover, preferably with its opaque part. Alternatively the bottom side of the heat sink module is shielded with front or lateral protrusion 20 shaped in the housing. However, it may also remain uncovered.

In simplified embodiment the heat sink module is integral with the housing and is made of aluminum. However, to reduce the costs, the housing can be made of plastic, but in this case an additional heat connector, e.g. a metal plate, should be inserted between the LED modules and the heat sink modules. Both embodiments are suitable in particular for long lines of identical street lamps.

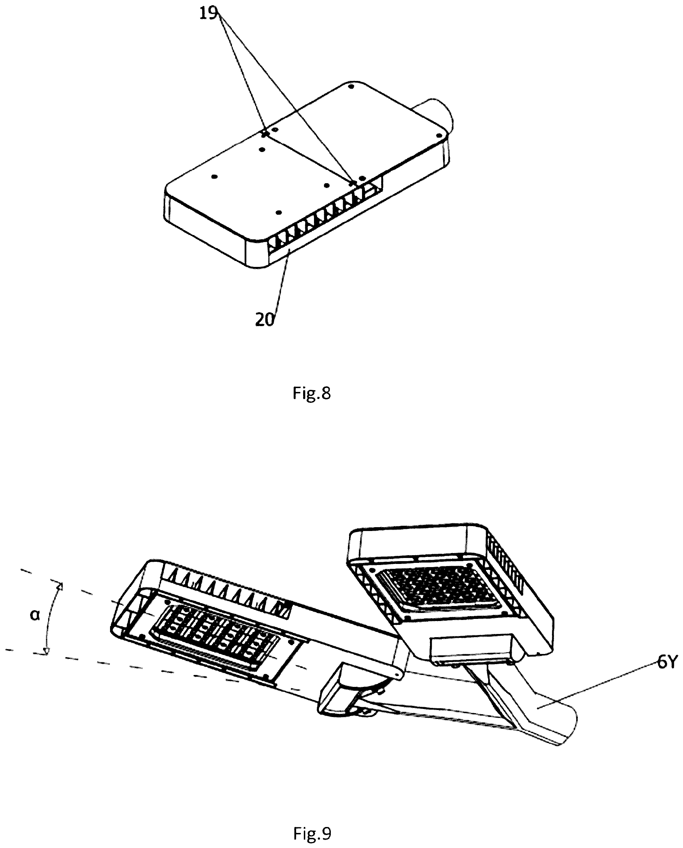

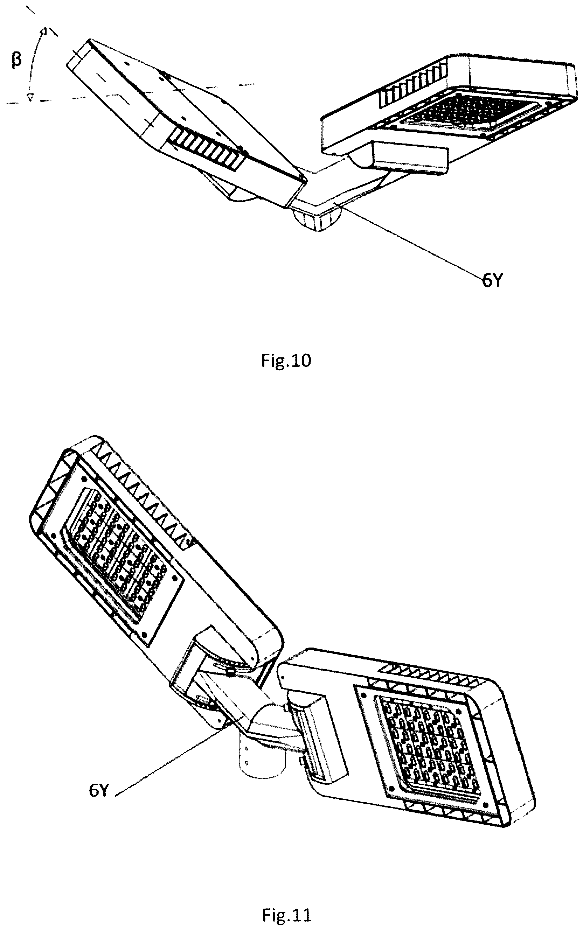

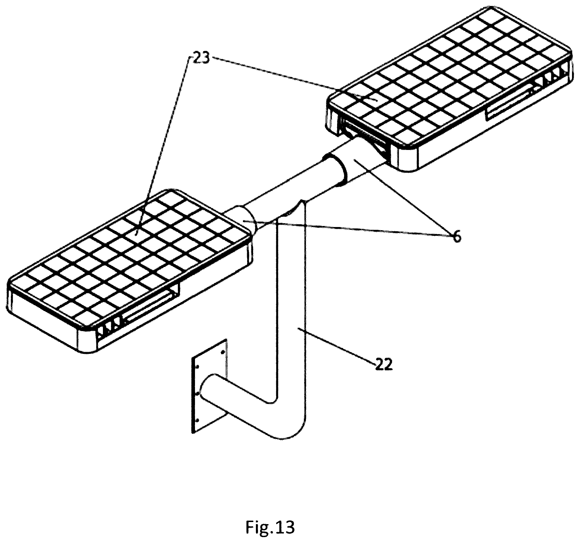

Conversely, to facilitate illumination of the spot area, e.g. the streets corner or the staircase and entrance to the building, the fixture has a means to adjust the longitudinal tilt angle α and/or the transversal tilt angle β. This is particularly useful if the streetlight has at least two lighting units (Fig. 9-13). The two lighting units can be arranged side by side or set backs to each other.

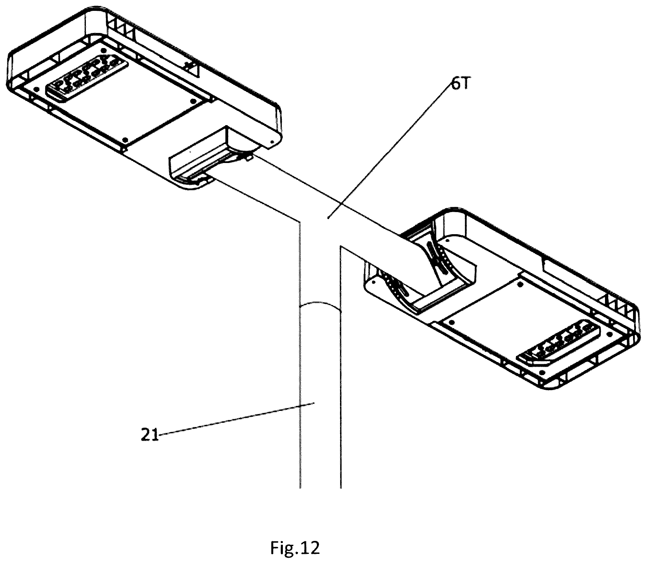

To reduce the costs it is advised to apply a common fixture 6Y, 6T receiving two or more lighting units. In most of applications common fixture is of Y-type (Fig. 9-11) or T-type (Fig. 12). Other arrangements of common fixtures are also possible, e.g. F-type with two levels of the lighting units, or Ψ-type for three lighting units.

The fixture in the lamp fits both the lamppost 21 and the wall mount bracket 22. It can be equally suspended over the illuminated area, e.g. a crossroads, on a support cable, provided the illuminating setup is suitably balanced.

Usually the streetlights are connected to the grid or a dedicated electrical network, but can also be powered by a photovoltaic device 23, a battery, a windmill, and the like.

### Reference numbers

- 1: lighting unit
- 2: housing
- 3: light source
- 4: bottom cover
- 5: top cover
- 6: fixture
- 6T: T-fixture
- 6Y: Y-fixture
- 7: LED module
- 8: LED
- 9: printed circuit board
- 10: void pocket
- 11: front wall
- 12: lateral walls
- 13: heat sink module
- 14: rectangular array
- 15: movement sensor
- 16: infrared sensor
- 17: light sensor
- 18: sectors
- 19: hinge
- 20: front/lateral protrusion of the housing
- 21: lamppost
- 22: wall mount bracket
- 23: photovoltaic device
- α: longitudinal tilt angle
- β: transversal tilt angle

## Claims

1. A streetlight comprising at least one lighting unit (1) which has a housing (2) equipped with a light source (3) composed of at least one LED module (7) which comprises the LEDs (8) and the controlling and supplying means mounted on a printed circuit board (9), further comprising a bottom cover (4) which is at least partially translucent, a top cover (5), and a fixture (6), and wherein the lighting unit (1) has at least one heat sink module (13) fixed with thermal connection to the housing (2), wherein the at least one heat sink module (13) is placed in a void pocket (10) opened to the outside and bounded by front wall (11) and lateral walls (12) of the housing (2), and the top cover (5), **characterized in that** the fixture (6) has an actuator, to adjust the longitudinal tilt angle (α) of the lighting unit (1), and an actuator, to adjust the transversal tilt angle (β) of the lighting unit (1), and **in that** the lighting unit (1) is powered by a photovoltaic device (23), which is a photovoltaic panel attached directly to the lighting unit (1), and **in that** the number of additional heat sink modules (13) installed in the void pocket (10) is an integer proportional to the heating power produced by the photovoltaic panel, and **in that** two or more lighting units (1) are arranged side by side or they are set backs to each other, wherein the fixture (6Y, 6T) is common for at least two lighting units (1), and the fixture (6, 6Y, 6T) is fixed to the lamppost (21) or to the wall mount bracket (22).

2. The streetlight according to claim 1, wherein the number of the heat sink modules (13) fixed in the void pocket (10) is adjusted to the number of the LED modules (7), preferably the number of the heat sink modules (13) is an integer proportional to aggregated power of the LED modules (7).

3. The streetlight according to claim 1, wherein the LED modules (7) are arranged in a rectangular array (14), and wherein the number of the heat sink modules (13) fixed in the void pocket (10) is adjusted to the area of the rectangular array (14), preferably this number is proportional to the area of the rectangular array (14).

4. The streetlight according to any of the preceding claims, wherein the lighting unit (1) has a movement sensor (15) and/or an infrared sensor (16).

5. The streetlight according to any of the preceding claims, wherein the lighting unit (1) has at least one light sensor (17).

6. The streetlight according to claim 5, wherein the LED modules (7) are rectangular and are arranged in a rectangular array (14) which is divided into sectors (18), and each sector is individually switched on and off according to the level of ambient light measured by the light sensor (17).

7. The streetlight according to any of the preceding claims, wherein the top cover (5) consists of two pieces which are preferably coupled to a hinge (19).

8. The streetlight according to any of the preceding claims, wherein the bottom side of the heat sink module (13) is shielded with the bottom cover (4) or with front or lateral protrusion (20) of the housing (2).

9. The streetlight according to any of the preceding claims, wherein the heat sink module (13) is integral with the housing (2) and is made of aluminum, or the housing is made of plastic and the heat sink module is thermally connected to a metal plate placed between the LED modules and the top cover.

## Patentansprüche

1. Straßenlaterne bestehend aus mindestens einer Beleuchtungseinheit (1) mit Gehäuse (2) mit Lichtquelle (3) bestehend aus mindestens einem LED-Modul (7) mit LEDs (8) sowie Steuer- und Versorgungssystemen in der Platine (9), darüber hinaus mit der unteren Abdeckung (4), die zumindest teilweise durchsichtig ist, der oberen Abdeckung (5) sowie der Fassung (6), wobei die Beleuchtungseinheit (1) über mindestens ein Kühlkörpermodul (13) verfügt, das mit der Abdeckung (2) wärmeleitend verbunden ist, wobei das Kühlkörpermodul (13) sich in der leeren, nach außen geöffneten Tasche befindet (10), die durch die Frontwand (11) und die Seitenwände (12) des Gehäuses (2) umgeben ist und die obere Abdeckung (5) **dadurch gekennzeichnet ist, dass** die Fassung (6) über ein Stellglied zur Einstellung der Längsneigungswinkels (α) (1) und ein Stellglied zur Einstellung der Querneigungswinkels (β) der Beleuchtungseinheit (1) verfügt, und dass die Beleuchtungseinheit (1) durch das Solargerät (23) versorgt wird, das aus einem Solarpanel besteht, dass mit der Beleuchtungseinheit (1) direkt verbunden ist, und dass die Anzahl der zusätzlichen Kühlkörpermodule (13) in der leeren Tasche (10) eine Ganzzahl ist, die proportional zur Heizleistung des Solarpanels ist, sowie dass zwei oder mehr Beleuchtungseinheiten (1) nebeneinander oder mit Rückwänden gegeneinander aufgestellt sind, wobei die Leuchte (6Y, 6T) gemeinsam für mindestens zwei Beleuchtungseinheiten (1) ist und die Leuchte (6, 6Y, 6T) am Lampenmast (21) oder an der Wandmontagestütze (22) befestigt ist.

2. Straßenlaterne nach Anspruch 1, wobei die Anzahl der in der leeren Tasche (10) montierten Kühlkörpermodule (13) an die Anzahl der LED-Module (7) angepasst ist; vorzugsweise ist die Anzahl der Kühlkörpermodule (13) eine ganze Zahl, die proportional zur Gesamtleistung der LED-Module (7) ist.

3. Straßenlaterne nach Anspruch 1, bei der die LED-Module (7) in einer rechteckigen Anordnung (14) angeordnet sind und bei der die Anzahl der in der leeren Tasche (10) montierten Kühlkörpermodule (13) an die oben genannte rechteckige Anordnung (14) angepasst ist; vorzugsweise ist diese Anzahl proportional zur Fläche des rechteckigen Systems (14).

4. Straßenlaterne nach einem der vorhergehenden Ansprüche, wobei die Beleuchtungseinheit (1) den Bewegungssensor (15) und / oder den Infrarotsensor (16) aufweist.

5. Straßenlaterne nach einem der vorhergehenden Ansprüche, wobei die Beleuchtungseinheit (1) mindestens einen Lichtsensor (17) aufweist.

6. Straßenlaterne nach Anspruch 5, wobei die LED-Module (7) eine rechteckige Form aufweisen und in einem rechteckigen Muster (14) angeordnet sind, das in Sektoren (18) unterteilt ist und jeder Sektor gemäß der vom Lichtsensor gemessenen Lichtleistung der Umgebungslicht einzeln ein- und ausgeschaltet wird (17).

7. Straßenlaterne nach einem der vorhergehenden Ansprüche, wobei die obere Abdeckung (5) aus zwei Teilen besteht, die vorzugsweise über ein Scharnier (19) miteinander verbunden sind.

8. Straßenlaterne nach einem der vorhergehenden Ansprüche, wobei die Unterseite des Kühlkörpermoduls (13) von einer unteren Abdeckung (4) oder einem vorderen oder seitlichen Vorsprung (20) des Gehäuses (2) abgedeckt ist.

9. Straßenlaterne nach einem der vorhergehenden Ansprüche, wobei das Kühlkörpermodul (13) in das Gehäuse (2) integriert ist und aus Aluminium besteht, oder das Gehäuse aus Kunststoff besteht und das Kühlkörpermodul mit Metallplatte zwischen den LED-Modulen und der oberen Abdeckung wärmeleitend verbunden ist.

## Revendications

1. Le lampadaire de rue comprenant au moins une unité d'éclairage (1), qui a un boîtier (2) équipé d'une source lumineuse (3) comprenant au moins un module LED (7) qui comprend des diodes LED (8) et des éléments de commande et d'alimentation montés sur une carte de circuit imprimé (9), comprenant en outre un couvercle inférieur (4) qui est au moins partiellement transparent, un couvercle supérieur (5) et un luminaire (6), l'unité d'éclairage (1) ayant au moins un module de dissipation (13) fixé par une connexion thermique au boîtier (2), dans lequel le au moins un module de dissipation (13) est situé dans une poche vide ouverte vers l'extérieur (10) délimitée par la paroi avant (11) et les parois latérales (12) du boîtier (2), et le couvercle supérieur (5) est **caractérisé en ce que** le luminaire (6) a un actionneur pour ajuster l'angle d'inclinaison longitudinal (α) de l'unité d'éclairage (1), et un actionneur pour régler l'angle d'inclinaison transversale (β) de l'unité d'éclairage (1), et **en ce que** l'unité d'éclairage (1) est alimentée par un dispositif photovoltaïque (23), qui est un panneau photovoltaïque fixé directement à l'unité d'éclairage (1), et **en ce que** le nombre de modules de dissipation supplémentaires (13) installés dans la poche vide (10) est un nombre entier proportionnel à la puissance de chauffage générée par le panneau photovoltaïque, et **en ce que** deux ou plusieurs unités d'éclairage (1) sont disposées côte à côte ou sont disposées dos à dos, le luminaire (6Y, 6T) étant commun à au moins deux unités d'éclairage (1) et le luminaire (6, 6Y, 6T) est fixé à un mât de lampadaire (21) ou à un support de montage mural (22).

2. Le lampadaire de rue selon la revendication 1, dans lequel le nombre de modules de dissipation (13) fixés dans la poche vide (10) est adapté au nombre de modules LED (7), de préférence lorsque, le nombre de modules de dissipation (13) est un nombre entier proportionnel à la puissance totale des modules LED (7).

3. Le lampadaire de rue selon la revendication 1, dans lequel les modules LED (7) sont disposés selon un agencement rectangulaire (14), et dans lequel le nombre de modules de dissipation (13) fixés dans la poche vide (10) est adapté à la surface de l'agencement rectangulaire (14) précité, de préférence lorsque, ce nombre est proportionnel à la surface de l'agencement rectangulaire (14).

4. Le lampadaire de rue selon l'une quelconque des revendications précédentes, dans lequel l'unité d'éclairage (1) comporte un capteur de mouvement (15) et/ou un capteur infrarouge (16).

5. Le lampadaire de rue selon l'une quelconque des revendications précédentes, dans lequel l'unité d'éclairage (1) comporte au moins un capteur de lumière (17).

6. Le lampadaire de rue selon la revendication 5, dans lequel les modules LED (7) ont une forme rectangulaire et sont disposés selon un agencement rectangulaire (14) qui est divisé en secteurs (18), chaque secteur étant allumé et éteint individuellement en fonction d'un niveau de lumière ambiante mesuré par un capteur de lumière (17).

7. Le lampadaire de rue selon l'une quelconque des revendications précédentes, dans lequel le couvercle supérieur (5) comprend deux parties qui sont de préférence reliées par une charnière (19).

8. Le lampadaire de rue selon l'une quelconque des revendications précédentes, dans lequel une face inférieure du module de dissipation (13) est protégée par un couvercle inférieur (4) ou une saillie frontale ou latérale (20) du boîtier (2).

9. Le lampadaire de rue selon l'une quelconque des revendications précédentes, dans lequel le module de dissipation (13) est intégré dans le boîtier (2) et est réalisé en aluminium, ou le boîtier est réalisé en matière plastique, et le module de dissipation est relié thermiquement à une plaque métallique disposée entre les modules LED et le couvercle supérieur.
